# EUROPEAN PATENT SPECIFICATION

(11) **EP 3 016 021 B1**
(45) Date of publication and mention of the grant of the patent: **06.12.2017**
(21) Application number: 15190515.5
(22) Date of filing: 20.10.2015
(51) Int. Cl.: G06K 7/08

(54) **CARD READER**
KARTENLESER
LECTEUR DE CARTES

(30) Priority: 30.10.2014 JP 2014221543
(43) Date of publication of application: 04.05.2016
(73) Proprietor: Nidec Sankyo Corporation, Suwa-gun, Nagano 393-8511 (JP)
(72) Inventor: Uchiyama, Ryo, Nagano, Nagano (JP); Mizawa, Mamoru, Nagano, Nagano (JP); Takahashi, Kazunori, Nagano, Nagano (JP)
(74) Representative: Eisenführ Speiser

(56) References cited:
- EP-A1- 2 234 033
- JP-A- 2006 127 638
- US-A- 4 167 664

## Description

### [Field of the Invention]

The present invention relates to a card reader for reading magnetic data recorded in a card, and recording magnetic data into a card.

### [Background]

Conventionally, known is a magnetic recording & reproducing device for reading a magnetic barcode and the like, recorded in a prepaid card, and for recording a magnetic barcode and the like into a prepaid card (for example, refer to Patent Document 1). A magnetic recording & reproducing device described in Patent Document 1 is provided with a magnetic barcode head for reading and recording a magnetic barcode and a serial magnetic code of a prepaid card. The magnetic barcode head includes two channels, that is to say; a first channel (a first core part) for reading and recording a magnetic barcode, and a second channel (a second core part) for reading and recording a serial magnetic code.

In the magnetic recording & reproducing device described in Patent Document 1, a first facing roller (a first separate roller) is so placed as to face toward the first channel of the magnetic barcode head, and meanwhile a second facing roller (a second separate roller) is so placed as to face toward the second channel of the magnetic barcode head. Therefore, in the magnetic recording & reproducing device, it is possible to secure a close contact condition between a magnetic barcode of a prepaid card and the first channel of the magnetic barcode head, and a close contact condition between a serial magnetic code of a prepaid card and the second channel of the magnetic barcode head. As a result, in the magnetic recording & reproducing device, it becomes possible to appropriately read and record a magnetic barcode and a serial magnetic code.

### [Prior Art Document]

### [Patent Document]

Patent Document 1: Japanese Unexamined Patent Application Publication No. 2006-127638

### [Summary of Invention]

### [Problem to Be Solved]

In the case where a magnetic head includes a plurality of channels, as explained with respect to the magnetic recording & reproducing device described in Patent Document 1, each of a plurality of channels is provided with a facing roller that faces toward the channel so that all the channels can contact the card, and as a result, every channel becomes able to appropriately read and record magnetic data. In the meantime, for example; in the case of attempting to downsize a device equipped with a magnetic head including a plurality of channels, unfortunately there may also be a chance that a space for placement of a facing roller that faces toward all of the plurality of channels cannot be secured. In such a case, there is a risk that a gap may appear between a channel, for which no facing roller is placed, and the card so that the channel cannot appropriately read and record magnetic data.

Then, it is an objective of the present invention to provide a card reader equipped with a magnetic head including a plurality of channels, wherein the card reader can appropriately read and record magnetic data at all the channels, even though a facing roller that faces toward all of the plurality of channels cannot be placed. US4167664 discloses an assembly for adjustably mounting a read-write head in a card reader apparatus so as to compensate for warped and inaccurate cards without yielding erroneous data. The assembly includes a head carrying frame member, an intermediate frame member, and a pivot block assembly, all of which combine to provide an adjustable floating action of the magnetic head carried thereby with respect to cards passed thereunder.

### [Means to Solve the Problem]

To bring a solution for the subject described above, there is provided a card reader according to claim 1.

In the present invention, a width of the facing roller in the widthwise direction of the card is, for example, narrower than a width of the magnetic head in the widthwise direction of the card.

In the card reader according to the present invention, the facing roller placed so as to face the magnetic head is a taper roller in which an outer diameter at one end of the facing roller in the widthwise direction of the card is greater than an outer diameter at the other end of the facing roller in the widthwise direction of the card; and in a view from the passing direction of the card, the one end of the facing roller in the widthwise direction of the card and the shaking center of the magnetic head are displaced from each other, in the widthwise direction of the card. Therefore, according to the present invention, when the card passes through between the magnetic head and the facing roller, the one end of the facing roller in the widthwise direction of the card exercises a force on the card in order to push the card toward the magnetic head; and in the meantime; on the magnetic head, a force for tilting the magnetic head acts in a direction for making all the channels of the magnetic head contact with the card, centering around the shaking center of the magnetic head, by means of the force acting on the card. Therefore, according to the present invention, even though a facing roller facing all of a plurality of channels cannot be placed, it becomes possible to make all the channels contact with the card; and as a result, it becomes possible to appropriately read and record magnetic data at all the channels.

In the present invention, it is preferable that; one direction in the widthwise direction of the card is a first direction and the other direction in the widthwise direction of the card is a second direction, in the widthwise direction of the card, the one end of the facing roller in the widthwise direction of the card is placed at a side of the first direction, in relation to one of the channels placed at a furthest position toward the first direction, or otherwise, placed at a side of the second direction, in relation to one of the channels placed at a furthest position toward the second direction. In this case, for example, the magnetic head is provided with a first channel, a second channel, and a third channel as the channels; the first channel, the second channel, and the third channel are so placed as to line up in this order from the side of the first direction to the side of the second direction; in a view from the passing direction of the card, the shaking center of the magnetic head is placed almost at the same position as the second channel, in a horizontal direction; and the one end of the facing roller in the widthwise direction of the card is placed at a side of the first direction in the widthwise direction of the card, in relation to the first channel.

According to this configuration, a moment acting on the magnetic head, at a time when the card passes through between the magnetic head and the facing roller, becomes great; wherein the moment is what acts in a direction for tilting the magnetic head, in order to make all the channels of the magnetic head contact with the card, centering around the shaking center of the magnetic head. Therefore, it becomes possible to secure a close contact condition between all the channels and the card; and as a result, it becomes possible to read and record magnetic data more appropriately at all the channels.

In the present invention, it is preferable that the card reader includes a transfer roller for transferring the card in the card transfer path, and a pad roller placed so as to face the transfer roller in such a way as to hold the card, passing through the card transfer path, between the transfer roller and the pad roller itself; and one direction in the widthwise direction of the card is a first direction and the other direction in the widthwise direction of the card is a second direction, the magnetic head and the facing roller are placed at a side of the first direction in the widthwise direction of the card, in relation to the transfer roller and the pad roller, and in a view from the passing direction of the card, the one end of the facing roller in the widthwise direction of the card is placed at a side of the first direction in the widthwise direction of the card, in relation to the tilting axis of the magnetic head.

According to this configuration, being compared with a case where the one end of the facing roller in the widthwise direction of the card is placed at a side of the second direction in the widthwise direction, in relation to the shaking center of the magnetic head; in the widthwise direction of the card, a distance between a position of the transfer roller and the pad roller, where a part of the card is held, and a position of the one end of the facing roller can be made long. Therefore, the card can easily be deformed, in such a way as to increase a contacting force between all the channels of the magnetic head and the card, wherein the magnetic head being tilted in a direction for all the channels to contact with the card; and as a result, it becomes possible to secure a close contact condition between all the channels and the card. Therefore, it becomes possible to read and record magnetic data more appropriately at all the channels.

### [Advantageous Effect of the Invention]

As described above, according to the present invention, it becomes possible for a card reader equipped with a magnetic head including a plurality of channels to appropriately read and record magnetic data at all the channels, even though a facing roller that faces toward all of the plurality of channels cannot be placed.

### [Brief Description of the Drawings]

FIG. 1 is a front elevation view of a card reader according to an embodiment of the present invention.
FIG. 2 is a diagram for explaining a general configuration of the card reader, viewed from E-E direction shown in FIG. 1.
FIG. 3 is a diagram for explaining a configuration of the card reader, viewed from F-F direction shown in FIG. 2.
FIG. 4 is a front elevation view of a facing roller shown in FIG. 1.
FIG. 5 is a diagram showing a condition in which a card passes through between a magnetic head and the facing roller that are shown in FIG. 1.
FIG. 6 is a conceptual diagram for explaining a condition of a section 'G' shown in FIG. 5.
FIG. 7 includes conceptual diagrams for explaining placement of the facing roller according to another embodiment of the present invention.

### [Description of the Preferred Embodiments]

An embodiment of the present invention is described below with reference to the accompanying drawings.

### (Structure of card reader)

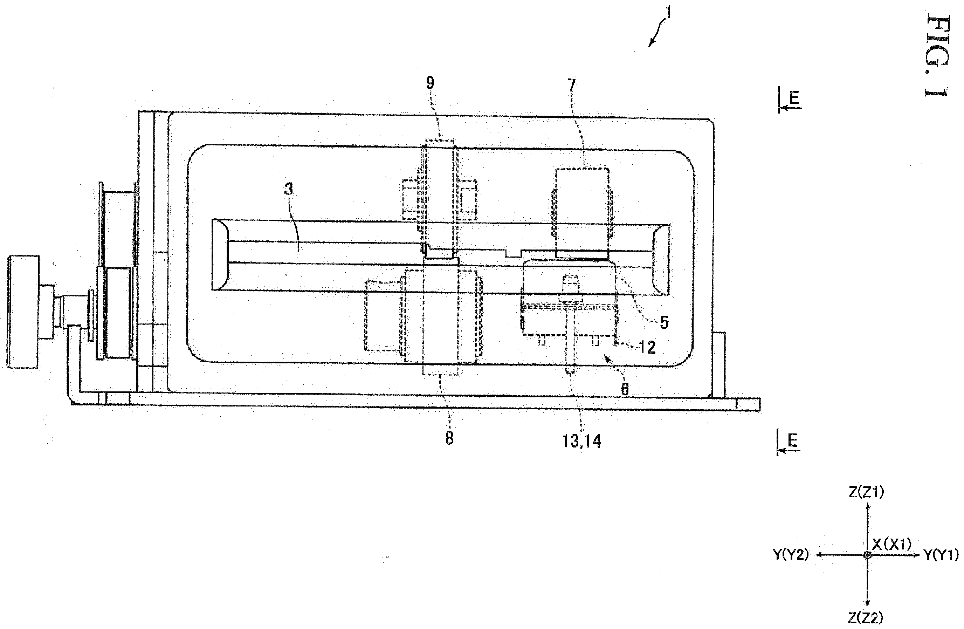

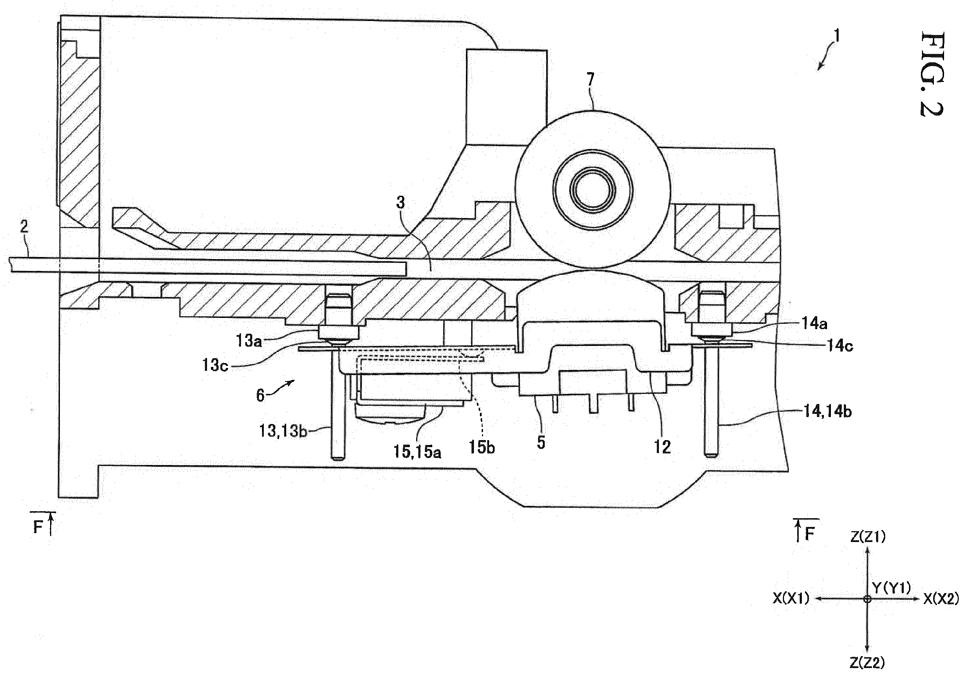

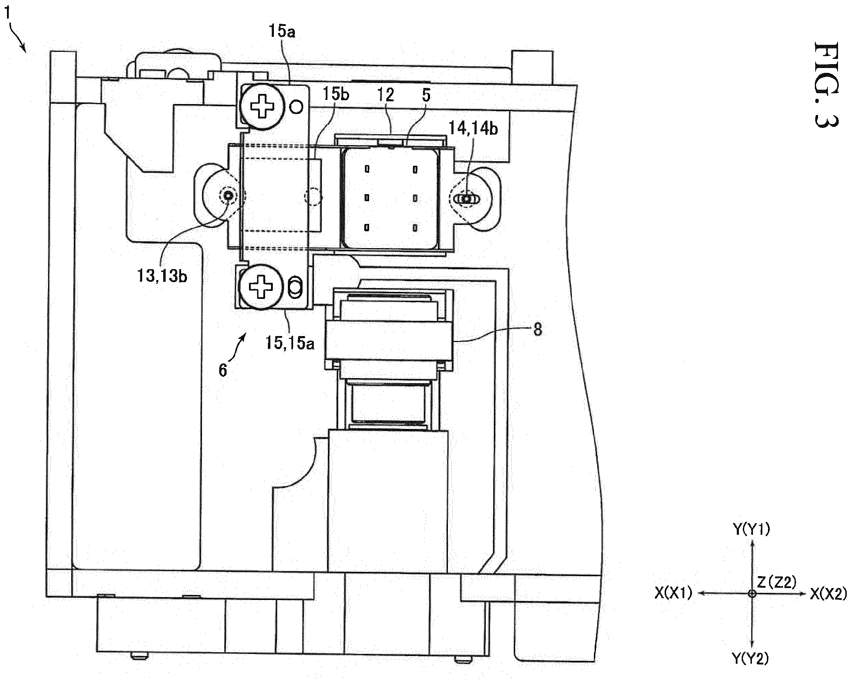

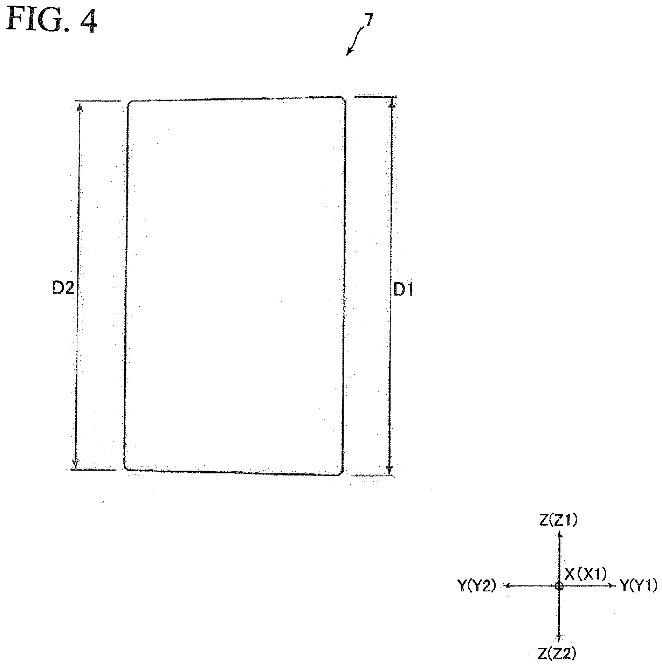

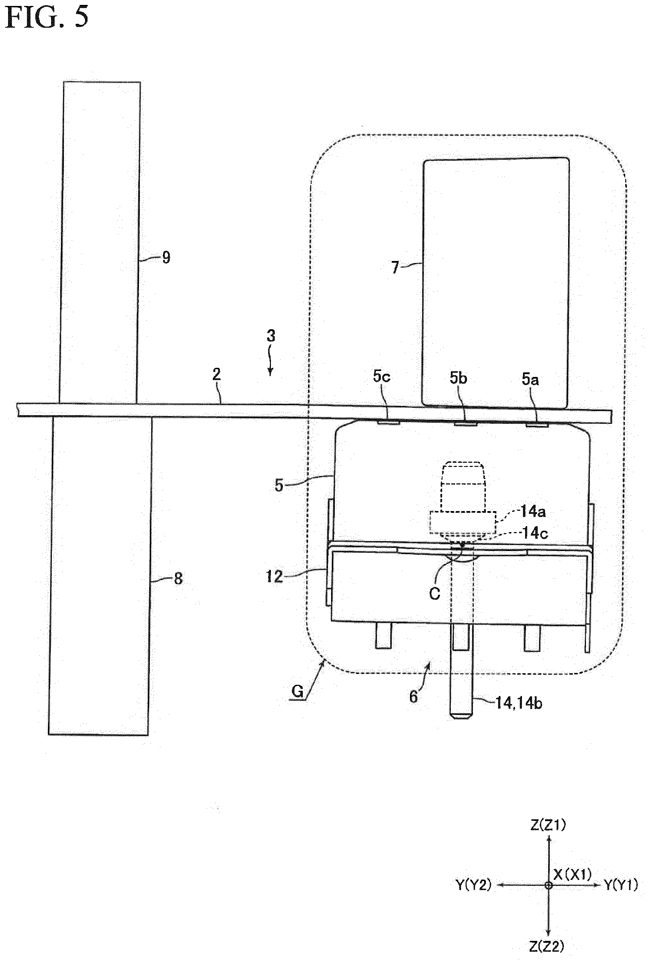

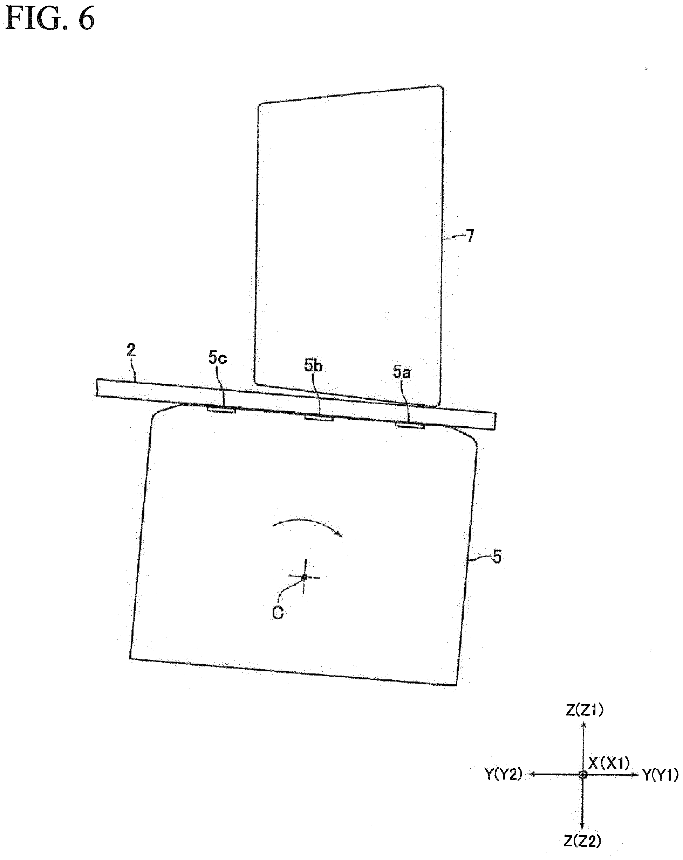

FIG. 1 is a front elevation view of a card reader 1 according to an embodiment of the present invention. FIG. 2 is a diagram for explaining a general configuration of the card reader 1, viewed from E-E direction shown in FIG. 1. FIG. 3 is a diagram for explaining a configuration of the card reader 1, viewed from F-F direction shown in FIG. 2. FIG. 4 is a front elevation view of a facing roller 7 shown in FIG. 1. FIG. 5 is a diagram showing a condition in which a card 2 passes through between a magnetic head 5 and a facing roller 7 that are shown in FIG. 1. FIG. 6 is a conceptual diagram for explaining a condition of a section 'G' shown in FIG. 5. Incidentally, in FIG. 2 and FIG. 3, only a front end side of the card reader 1 is illustrated.

The card reader 1 according to the present embodiment is a device for reading magnetic data recorded in the card 2, and recording magnetic data into the card 2; and the device is installed in a predetermined higher-level device, such as an automated teller machine (ATM) and the like, for usage. Inside the card reader 1, there is formed a card transfer path 3 through which the card 2 passes. The card reader 1 includes; the magnetic head 5 that executes at least one of reading magnetic data recorded in the card 2 and recording magnetic data into the card 2, a head support mechanism 6 for supporting the magnetic head 5, the facing roller 7 placed so as to face toward the magnetic head 5, a transfer roller 8 for transferring the card 2 in the card transfer path 3, and a pad roller 9 placed so as to face toward the transfer roller 8. Incidentally, illustrations of the transfer roller 8 and the pad roller 9 are omitted in FIG. 2.

In the present embodiment, the card 2 passes through in a direction-X shown in FIG. 1 and the like. In other words, the direction-X is a passing direction of the card 2 that passes through the card transfer path 3; and the card 2 is transferred in the direction-X by the transfer roller 8, the pad roller 9, and the like. In the meantime, a direction-Z shown in FIG. 1 and the like, which is perpendicular to the direction-X, is a direction of a thickness of the card 2 passing through the card transfer path 3; and furthermore, a direction-Y shown in FIG. 1 and the like, which is perpendicular to the direction-X and the direction-Z, is a direction of a width of the card 2 passing through the card transfer path 3. In the explanation below, the direction-X represents a "front-back direction", the direction-Y represents a "horizontal direction", and the direction-Z represents a "vertical direction." Moreover, an X1-direciton side is a "near (front)" side, an X2-direciton side is a "rear (back)" side, a Y1-direciton side is a "right" side, a Y2-direciton side is a "left" side, a Z1-direciton side is an "upper" side, and a Z2-direction side is a "lower" side. In the present embodiment, a right-ward direction (Y1-direciton) is one direction in a widthwise direction of the card 2, which represents a first direction; and in the meantime, a left-ward direction (Y2-direciton) is the other direction in the widthwise direction of the card 2, which represents a second direction.

The card 2 is a nearly rectangular-shaped card made of polyvinyl chloride, having a thickness of about 0.7 to 0.8 mm. At a reverse side of the card 2, there is formed a magnetic stripe in which magnetic data is recorded. The magnetic stripe is formed along a longitudinal direction of the card 2 that is nearly rectangular-shaped. In the magnetic stripe, magnetic data of a plurality of tracks can be recorded. The card 2 of the present embodiment is a card being compliant with an international standard and Japanese Industrial Standard (JIS); and then, in the magnetic stripe at the reverse side of the card 2, magnetic data of three tracks can be recorded, i.e., magnetic data of a first track, magnetic data of a second track, and magnetic data of a third track. In a situation where the reverse side of the card 2 is faced downward, and a longitudinal direction of the card 2 is nearly consistent with the front-back direction of the card 2, the card 2 is inserted into the card reader 1 and transferred inside the card reader 1. Incidentally, an IC chip may be embedded as well in the card 2. Moreover, the card 2 may be a polyethylene terephthalate (PET) card having a thickness of about 0.18 to 0.36 mm, or a paper card having a predetermined thickness, and the like.

The transfer roller 8 is so placed as to approach the card transfer path 3 from a lower side. The transfer roller 8 is connected to a motor by the intermediary of a power transmission mechanism, such as a belt, a pulley, and the like. In the meantime, the transfer roller 8 is a rubber roller whose circumferential part is formed of rubber. The pad roller 9 is so placed as to approach the card transfer path 3 from an upper side. Moreover, the pad roller 9 is so placed as to face the transfer roller 8 in such a way as to hold the card 2, passing through the card transfer path 3, between the transfer roller 8 and the pad roller 9 itself. The pad roller 9 is biased toward the transfer roller 8. Moreover, the pad roller 9 is a rubber roller formed of rubber. As shown in FIG. 1, the transfer roller 8 and the pad roller 9 are located almost at a middle position of the card transfer path 3 in a horizontal direction.

The magnetic head 5 is provided with a plurality of channels for reading and recording magnetic data of each of the plurality of tracks of the magnetic stripes of the card 2. Specifically to describe, the magnetic head 5 is provided with three channels 5a through 5c; i.e., a first channel 5a for reading and recording magnetic data of the first track, a second channel 5b for reading and recording magnetic data of the second track, and a third channel 5c for reading and recording magnetic data of the third track, as shown in FIG. 5. In other words, the magnetic head 5 is provided with; a core and a coil wound around the core, wherein the core and the coil constitute the first channel 5a; another core and another coil wound around the core, wherein the core and the coil constitute the second channel 5b; and still another core and still another coil wound around the core, wherein the core and the coil constitute the third channel 5c.

The first channel 5a, the second channel 5b, and the third channel 5c are placed so as to line up in a horizontal direction. Concretely to describe, the first channel 5a, the second channel 5b, and the third channel 5c are so placed as to line up in this order from the right to the left. Moreover, the magnetic head 5 is so placed as to approach the card transfer path 3 from a lower side. Concretely to describe, the magnetic head 5 is placed in such a way that a gap part of the magnetic head 5 approaches the card transfer path 3 from a lower side. Moreover, in a horizontal direction, the magnetic head 5 is placed at a position where the magnetic stripes of the card 2 pass through.

The head support mechanism 6 is provided with a plate spring 12 to which the magnetic head 5 is fixed, two support pins 13 and 14 to be individually inserted into two through holes that are formed in the plate spring 12, and a supporting member 15 to support the magnetic head 5 and the plate spring 12 from a lower side. The magnetic head 5 is fixed to the plate spring 12, in such a way that an upper end part of the magnetic head 5 protrudes upward. An upper end part of each of the support pins 13 and 14 is fixed to a frame of the card reader 1. Moreover, the support pins 13 and 14 are fixed to the frame of the card reader 1, in such a way that their axial direction coincides with a vertical direction. Furthermore, the support pin 13 is placed at a near side before the magnetic head 5, and meanwhile the support pin 14 is placed at a rear side behind the magnetic head 5. In the meantime, the support pin 13 and the support pin 14 are placed at the same position in the horizontal direction.

The support pin 13 and the support pin 14 are shaped so as to have the same form. Specifically to describe, the support pin 13 and the support pin 14 are individually shaped to have a slender cylindrical form with a step part. Moreover, as shown in FIG. 2, the support pin 13 and the support pin 14 are provided with large-diameter parts 13a and 14a, small-diameter parts 13b and 14b having a smaller outer diameter than the large-diameter parts 13a and 14a have, and tapered parts 13c and 14c which are formed between the large-diameter parts 13a and 14a and the small-diameter parts 13b and 14b. An outer circumference surface of each of the tapered parts 13c and 14c is a conical surface in which an outer diameter gradually becomes smaller from a side of the large-diameter parts 13a and 14a toward a side of the small-diameter parts 13b and 14b. Meanwhile, the large-diameter parts 13a and 14a, the tapered parts 13c and 14c, and the small-diameter parts 13b and 14b are placed in this order from an upper side.

The small-diameter part 13b of the support pin 13 is inserted into a through hole as a circle hole that is shaped at a front end side of the plate spring 12. An inner diameter of the through hole is nearly equal to an outer diameter of the small-diameter part 13b. The small-diameter part 14b of the support pin 14 is inserted into a through hole that is shaped at a rear end side of the plate spring 12. This through hole is shaped as a long hole having its longitudinal direction in a front-back direction. Meanwhile, a width of the through hole in a horizontal direction is nearly equal to an outer diameter of the small-diameter part 14b.

The supporting member 15 is formed by way of bending a thin metal plate into a predetermined shape. The supporting member 15 includes two fixing parts 15a to be fixed to the frame of the card reader 1, and a spring part 15b to bias the plate spring 12 upward. The spring part 15b is formed between the two fixing parts 15a in a horizontal direction. Moreover, the spring part 15b contacts a front end side part of the plate spring 12 (a front side part before the magnetic head 5) from a lower side, so as to bias the front end side part of the plate spring 12 upward.

The magnetic head 5 is biased toward the facing roller 7, and moreover the magnetic head 5 is able to shake with respect to a shaking axis direction arranged in a front-back direction. Concretely to describe, the magnetic head 5 is biased toward the facing roller 7 with a biasing force of the plate spring 12 and the spring part 15b of the supporting member 15. Furthermore, the plate spring 12 is biased with a biasing force of the spring part 15b, in such a way that a top surface of the plate spring 12 contacts lower end parts of the outer circumference surfaces of the tapered parts 13c and 14c, so that the magnetic head 5 fixed to the plate spring 12 is able to shake with respect to the shaking axis direction arranged in the front-back direction, by using the lower end parts of the tapered parts 13c and 14c as a fulcrum point. In other words, in a view from the front-back direction, the lower end parts of the tapered parts 13c and 14c work as a shaking center 'C' of the magnetic head 5.

The facing roller 7 is so placed as to approach the card transfer path 3 from an upper side. Moreover, the facing roller 7 is so placed as to face the magnetic head 5 in such a way as to hold the card 2, passing through the card transfer path 3, between the magnetic head 5 and the facing roller 7 itself. The facing roller 7 is supported by a fixing shaft fixed to the frame of the card reader 1, so as to be rotatable. Otherwise, the facing roller 7 is fixed to a turning shaft, supported by the frame of the card reader 1 so as to be rotatable. The facing roller 7 is formed of a resin, such as poly-acetal (POM) and the like.

As shown in FIG. 4, the facing roller 7 is a taper roller in which an outer diameter D1 at a right end of the facing roller 7 is greater than an outer diameter D2 at a left end of the facing roller 7, and then a shape of the facing roller 7 is an isosceles trapezoid, in a view from a front-back direction. A difference between the outer diameter D1 and the outer diameter D2 is, for example, about 0.3 mm. The magnetic head 5 and the facing roller 7 are placed almost at the same position as the transfer roller 8 and the pad roller 9, in the front-back direction. Meanwhile, the magnetic head 5 and the facing roller 7 are placed at a right-hand side in a horizontal direction, in relation to the transfer roller 8 and the pad roller 9.

As shown in FIG. 5, a width of the facing roller 7 in the horizontal direction is narrower than a width of the magnetic head 5 in the horizontal direction. Moreover, in a view from the front-back direction, the right end of the facing roller 7 and the shaking center 'C' of the magnetic head 5 are displaced from each other, in the horizontal direction. Specifically to describe, in the view from the front-back direction, the right end of the facing roller 7 is placed at a right-hand side in the horizontal direction, in relation to the shaking center 'C'. More specifically to describe, at first, in the view from the front-back direction, the shaking center `C' of the magnetic head 5 is placed almost at the same position as the second channel 5b of the magnetic head 5, in the horizontal direction. In other words, in the view from the front-back direction, the shaking center 'C' of the magnetic head 5 is placed at a lower side of the second channel 5b. Moreover, in the view from the front-back direction, the right end of the facing roller 7 is placed at a right-hand side in the horizontal direction, in relation to the first channel 5a. Namely, the right end of the facing roller 7 is placed still at a right-hand side, in relation to the first channel 5a located at a rightmost position among the three channels 5a through 5c.

Therefore, as shown in a conceptual diagram of FIG. 6; when the card 2 passes through between the magnetic head 5 and the facing roller 7, the right end of the facing roller 7 exercises a force on the card 2 in order to push the card 2 toward the magnetic head 5. In the meantime; on the magnetic head 5, a force for tilting the magnetic head 5 acts in a clockwise direction shown in FIG. 6, centering around the shaking center 'C', by means of the force acting on the card 2. In other words; on the magnetic head 5, a force for tilting the magnetic head 5 acts in a direction for making all the channels 5a through 5c of the magnetic head 5 contact with the card 2, centering around the shaking center 'C', by means of the force acting on the card 2. Incidentally, in the present embodiment, the facing roller 7 faces the first channel 5a and the second channel 5b, and does not face the third channel 5c.

### (Primary advantageous effect of the present embodiment)

As explained above, in the present embodiment; when the card 2 passes through between the magnetic head 5 and the facing roller 7, the right end of the facing roller 7 exercises a force on the card 2 in order to push the card 2 toward the magnetic head 5. In the meantime; on the magnetic head 5, a force for tilting the magnetic head 5 acts in a direction for making all the channels 5a through 5c of the magnetic head 5 contact with the card 2, centering around the shaking center 'C', by means of the force acting on the card 2. Therefore, in the present embodiment, even though there is placed the facing roller 7 that faces the first channel 5a and the second channel 5b, and does not face the third channel 5c (in other words, even though a facing roller 7 facing all the three channels 5a through 5c cannot be placed), it becomes possible to make all the channels 5a through 5c contact with the card 2. As a result, according to the present embodiment, it becomes possible to appropriately read and record magnetic data at all the channels 5a through 5c.

In the present embodiment, the shaking center 'C' of the magnetic head 5 is placed at the lower side of the second channel 5b, and the right end of the facing roller 7 is placed at a right-hand side in the horizontal direction, in relation to the first channel 5a. Therefore, in the present embodiment; a moment acting on the magnetic head 5, at a time when the card 2 passes through between the magnetic head 5 and the facing roller 7, becomes great; wherein the moment is what acts in a direction for tilting the magnetic head 5, in order to make all the channels 5a through 5c of the magnetic head 5 contact with the card 2, centering around the shaking center 'C'. Therefore, according to the present embodiment, it becomes possible to secure a close contact condition between all the channels 5a through 5c and the card 2; and as a result, it becomes possible to read and record magnetic data more appropriately at all the channels 5a through 5c.

In the present embodiment, the magnetic head 5 and the facing roller 7 are placed at the right-hand side in the horizontal direction, in relation to the transfer roller 8 and the pad roller 9. Moreover, in the present embodiment, the right end of the facing roller 7 is placed at the right-hand side in the horizontal direction, in relation to the shaking center 'C' of the magnetic head 5. Therefore, being compared with a case where the right end of the facing roller 7 is placed at a left-hand side in the horizontal direction, in relation to the shaking center 'C', a distance in the horizontal direction between a position of the transfer roller 8 and the pad roller 9 where a middle part of the card 2 in the horizontal direction is held, and a position of the right end of the facing roller 7 pushing the card 2 toward the magnetic head 5 becomes long in the preset embodiment. Accordingly, being compared with the case where the right end of the facing roller 7 is placed at a left-hand side in the horizontal direction, in relation to the shaking center 'C'; the card 2 can easily be deformed according to the present embodiment, in such a way as to increase a contacting force between all the channels 5a through 5c of the magnetic head 5 and the card 2, wherein the magnetic head 5 being tilted in a direction for all the channels 5a through 5c to contact with the card 2. Therefore, according to the present embodiment, it becomes possible to secure a close contact condition between all the channels 5a through 5c and the card 2; and as a result, it becomes possible to read and record magnetic data more appropriately at all the channels 5a through 5c.

### (Other embodiments)

Although the embodiment described above is an example of a preferred embodiment according to the present invention, the present invention is not limited to the above embodiment and various variations and modifications may be made without changing the concept of the present invention.

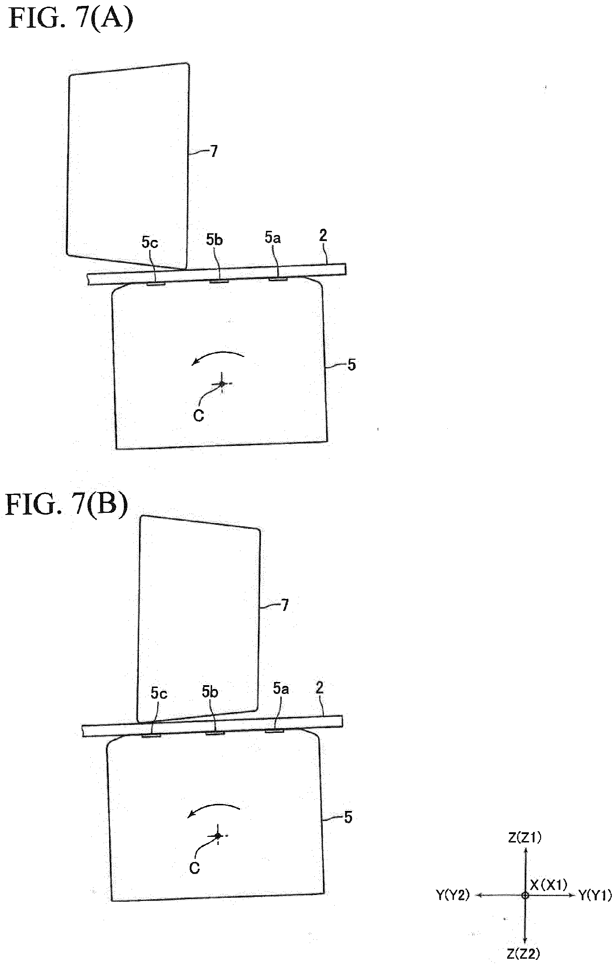

In the embodiment described above; in the view from the front-back direction, the right end of the facing roller 7 is placed at the right-hand side in the horizontal direction, in relation to the shaking center 'C'. Otherwise, for example, the right end of the facing roller 7 may be placed at a left-hand side in the horizontal direction, in relation to the shaking center 'C', as shown in FIG. 7(A). In this case, the facing roller 7 faces the third channel 5c, and does not face the first channel 5a, and the second channel 5b.

Even in this case; when the card 2 passes through between the magnetic head 5 and the facing roller 7, the right end of the facing roller 7 exercises a force on the card 2 in order to push the card 2 toward the magnetic head 5. In the meantime; on the magnetic head 5, a force for tilting the magnetic head 5 acts in a counterclockwise direction shown in FIG. 7(A), centering around the shaking center 'C', by means of the force acting on the card 2. In other words; on the magnetic head 5, a force for tilting the magnetic head 5 acts in a direction for making all the channels 5a through 5c of the magnetic head 5 contact with the card 2, centering around the shaking center 'C', by means of the force acting on the card 2. Therefore, even in this case, it becomes possible to make all the channels 5a through 5c contact with the card 2; and as a result, it becomes possible to appropriately read and record magnetic data at all the channels 5a through 5c.

In the embodiment described above; the outer diameter D1 at the right end of the facing roller 7 is greater than the outer diameter D2 at the left end of the facing roller 7. Otherwise, for example, the outer diameter at the left end of the facing roller 7 may be greater than the outer diameter at the right end of the facing roller 7, as shown in FIG. 7(B). In this case, for example, in a view from the front-back direction, the left end of the facing roller 7 is placed at a left-hand side in the horizontal direction, in relation to the shaking center 'C'. Moreover, in this case, the facing roller 7 faces the second channel 5b and the third channel 5c, and does not face the first channel 5a.

In the case where the facing roller 7 is placed as shown in FIG. 7(B); when the card 2 passes through between the magnetic head 5 and the facing roller 7, the left end of the facing roller 7 exercises a force on the card 2 in order to push the card 2 toward the magnetic head 5. In the meantime; on the magnetic head 5, a force for tilting the magnetic head 5 acts in a counterclockwise direction shown in FIG. 7(B), centering around the shaking center 'C', by means of the force acting on the card 2. In other words; on the magnetic head 5, a force for tilting the magnetic head 5 acts in a direction for making all the channels 5a through 5c of the magnetic head 5 contact with the card 2, centering around the shaking center 'C', by means of the force acting on the card 2. Therefore, even in this case, it becomes possible to make all the channels 5a through 5c contact with the card 2; and as a result, it becomes possible to appropriately read and record magnetic data at all the channels 5a through 5c.

Moreover, in the case where the outer diameter at the left end of the facing roller 7 is greater than the outer diameter at the right end of the facing roller 7, the left end of the facing roller 7 may be placed at a right-hand side in the horizontal direction, in relation to the shaking center 'C'. In this case, the facing roller 7 faces the first channel 5a, and does not face the second channel 5b and the third channel 5c. Even in this case, when the card 2 passes through between the magnetic head 5 and the facing roller 7, the left end of the facing roller 7 exercises a force on the card 2 in order to push the card 2 toward the magnetic head 5. In the meantime; on the magnetic head 5, a force for tilting the magnetic head 5 acts in a direction for making all the channels 5a through 5c of the magnetic head 5 contact with the card 2, centering around the shaking center 'C', by means of the force acting on the card 2. Therefore, even in this case, it becomes possible to make all the channels 5a through 5c contact with the card 2; and as a result, it becomes possible to appropriately read and record magnetic data at all the channels 5a through 5c.

In the embodiment described above; in the view from the front-back direction, the shaking center 'C' of the magnetic head 5 is placed almost at the same position as the second channel 5b of the magnetic head 5, in the horizontal direction. Otherwise, for example, in the view from the front-back direction, the shaking center 'C' and the second channel 5b may be displaced from each other, in the horizontal direction. Moreover, although the right end of the facing roller 7, in the embodiment described above, is placed at a right-hand side in relation to the first channel 5a, in the view from the front-back direction, the right end of the facing roller 7 may be placed between the first channel 5a and the second the channel 5b in the horizontal direction, or otherwise the right end of the facing roller 7 and the first channel 5a may nearly coincide with each other in the horizontal direction. In a similar way; although the left end of the facing roller 7, in a modification shown in FIG. 7(B), is placed at a left-hand side in relation to the third channel 5c in the horizontal direction, in the view from the front-back direction, the left end of the facing roller 7 may be placed between the second channel 5b and the third the channel 5c in the horizontal direction, or otherwise the left end of the facing roller 7 and the third channel 5c may nearly coincide with each other in the horizontal direction.

In the embodiment described above; the magnetic head 5 is provided with three channels 5a through 5c. Otherwise, for example, the magnetic head 5 may be a two-channel head provided with two channels, or a multi-channel head provided with four or more channels. Furthermore, although the card reader 1 in the above embodiment is a card reader of a card transfer type, which includes the transfer roller 8 and the pad roller 9, a card reader to which a configuration of the present invention is applied may be a manual card reader with which a user reads and records magnetic data while the user moves the card 2 by hand. For example, a card reader to which a configuration of the present invention is applied may be a card reader of a so-called dip type, in which magnetic data is read and recorded at a time of inserting the card 2 into the card reader, or pulling out the card 2 from the card reader.

### [Reference Numerals]

1. card reader
2. card
3. card transfer path
5. magnetic head
5a. first channel (channel)
5b. second channel (channel)
5c. third channel (channel)
7. facing roller
8. transfer roller
9. pad roller
C. shaking center of the magnetic head
D1. outer diameter at one end of the facing roller
D2. outer diameter at the other end of the facing roller
X. card passing direction
Y. card width direction
Y1. first direction
Y2. second direction
Z. card thickness direction

## Claims

1. A card reader (1) comprising:
a card transfer path (3) through which a card (2) passes;
a magnetic head (5) for at least one of reading magnetic data recorded in the card (2), and recording magnetic data into the card (2); and
a facing roller (7) placed so as to face toward the magnetic head (5), in such a way as to hold the card (2), passing through the card transfer path (3), between the magnetic head (5) and the facing roller (7) itself; wherein magnetic data of a plurality of tracks can be recorded in the card (2);
wherein the magnetic head (5) is provided with a plurality of channels (5a, 5b, 5c) for at least one of reading and recording magnetic data of the plurality of tracks individually;
wherein the plurality of channels (5a, 5b, 5c) are placed so as to line up in a widthwise direction (Y) of the card (2), the widthwise direction (Y) being perpendicular to a passing direction (X) of the card (2) that passes through the card transfer path (3), as well as a direction (Z) of a thickness of the card (2); and
wherein the facing roller (7) is a taper roller in which an outer diameter at one end of the facing roller (7) in the widthwise direction (Y) of the card (2) is greater than an outer diameter at the other end of the facing roller (7) in the widthwise direction (Y) of the card (2);
**characterized in that**
the magnetic head (5) is biased toward the facing roller (7), and moreover the magnetic head (5) is able to tilt with respect to a tilting axis (C) arranged parallel to the passing direction (X) of the card (2); and
in a view from the passing direction (X) of the card (2), the one end of the facing roller (7) in the widthwise direction (Y) of the card (2) and the tilting axis (C) of the magnetic head (5) are displaced from each other in the widthwise direction (Y) of the card (2), wherein in a view from the passing direction (X) of the card (2), the shape of the facing roller (7) is an isosceles trapezoid.

2. The card reader according to claim 1;
wherein, a width of the facing roller (7) in the widthwise direction (Y) of the card (2) is narrower than a width of the magnetic head (5) in the widthwise direction (Y) of the card (2).

3. The card reader according to claim 1 or claim 2; wherein, one direction in the widthwise direction (Y) of the card (2) is a first direction (Y1) and the other direction in the widthwise direction (Y) of the card (2) is a second direction (Y2);
in the widthwise direction (Y) of the card (2), the one end of the facing roller (7) in the widthwise direction (Y) of the card (2) is placed at a side of the first direction (Y1), in relation to one of the channels (5a, 5b, 5c) placed at a furthest position toward the first direction (Y1), or otherwise, placed at a side of the second direction (Y2), in relation to one of the channels (5a, 5b, 5c) placed at a furthest position toward the second direction (Y2).

4. The card reader according to claim 3;
wherein, the magnetic head (5) is provided with a first channel (5a), a second channel (5b), and a third channel (5c) as the channels;
the first channel (5a), the second channel (5b), and the third channel are so placed as to line up in this order from the side of the first direction (Y1) to the side of the second direction (Y2);
in a view from the passing direction (X) of the card (2), the tilting axis (C) of the magnetic head (5) is placed almost at the same position as the second channel (5b), in a horizontal direction; and
the one end of the facing roller (7) in the widthwise direction (Y) of the card (2) is placed at a side of the first direction (Y1) in the widthwise direction (Y) of the card (2), in relation to the first channel (5a).

5. The card reader according to any one of claim 1 to claim 4;
wherein, the card reader includes a transfer roller (8) for transferring the card (2) in the card transfer path (3), and a pad roller (9) placed so as to face the transfer roller (8) in such a way as to hold the card (2), passing through the card transfer path (3), between the transfer roller (8) and the pad roller (9) itself; and
one direction in the widthwise direction (Y) of the card (2) is a first direction (Y1) and the other direction in the widthwise direction (Y) of the card (2) is a second direction (Y2),
the magnetic head (5) and the facing roller (7) are placed at a side of the first direction (Y1) in the widthwise direction (Y) of the card (2), in relation to the transfer roller (8) and the pad roller (9), and
in a view from the passing direction (X) of the card (2), the one end of the facing roller (7) in the widthwise direction (Y) of the card (2) is placed at a side of the first direction (Y1) in the widthwise direction (Y) of the card (2), in relation to the tilting axis (C) of the magnetic head (5).

## Patentansprüche

1. Kartenleser (1) mit:
einem Kartentransportpfad (3), durch den hindurch sich eine Karte (2) bewegt;
einem Magnetkopf (5) zum Lesen von in der Karte (2) aufgezeichneten magnetischen Daten und/oder zum Aufzeichnen von magnetischen Daten in die Karte (2); und
einer zugewandten Rolle (7), die so angeordnet ist, dass sie dem Magnetkopf (5) zugewandt ist, um die sich durch den Kartentransportpfad (3) bewegende Karte (2) zwischen dem Magnetkopf (5) und der zugewandten Rolle (7) zu halten;
wobei magnetische Daten von einer Vielzahl von Spuren in der Karte aufgezeichnet werden können;
wobei der Magnetkopf (5) mit einer Vielzahl von Kanälen (5a, 5b, 5c) zum individuellen Lesen und Aufzeichnen von magnetischen Daten der Vielzahl von Spuren versehen ist;
wobei die Vielzahl der Kanäle (5a, 5b, 5c) so angeordnet sind, dass sie in Richtung (Y) der Breite der Karte (2) ausgerichtet sind, wobei die Richtung (Y) der Breite senkrecht zur Bewegungsrichtung (X) der Karte (2), die sich durch den Kartentransportpfad (3) bewegt, sowie zu einer Richtung (Z) einer Dicke der Karte (2) orientiert ist; und
wobei die zugewandte Rolle (7) eine Kegelrolle ist, bei der ein äußerer Durchmesser an dem einen Ende der zugewandten Rolle (7) in der Richtung (Y) der Breite der Karte (2) größer als ein äußerer Durchmesser am anderen Ende der zugewandten Rolle (7) in der Richtung (Y) der Breite der Karte (2) ist;
**dadurch gekennzeichnet, dass**
der Magnetkopf (5) zur zugewandten Rolle (7) hin vorgespannt ist und sich ferner der Magnetkopf (5) in Bezug auf eine Kippachse (C) neigen kann, die parallel zur Bewegungsrichtung (X) der Karte (2) angeordnet ist; und
aus Sicht der Bewegungsrichtung (X) der Karte (2) das eine Ende der zugewandten Rolle (7) in Richtung (Y) der Breite der Karte (2) und die Kippachse (C) des Magnetkopfes (5) in Richtung (Y) der Breite der Karte (2) voneinander beabstandet sind,
wobei aus Sicht der Bewegungsrichtung (X) der Karte (2) die Form der zugewandten Rolle (7) ein gleichschenkliges Trapez bildet.

2. Kartenleser nach Anspruch 1;
bei welchem eine Breite der zugewandten Rolle (7) in der Richtung (Y) der Breite der Karte (2) schmaler als eine Breite des Magnetkopfes (5) in der Richtung (Y) der Breite der Karte (2) ist.

3. Kartenleser nach Anspruch 1 oder Anspruch 2;
bei welchem eine Richtung in der Richtung (Y) der Breite der Karte (2) eine erste Richtung (Y1) und die andere Richtung in der Richtung (Y) der Breite der Karte (2) eine zweite Richtung (Y2) ist;
in der Richtung (Y) der Breite der Karte (2) das eine Ende der zugewandten Rolle (7) in der Richtung (Y) der Breite der Karte (2) an einer Seite der ersten Richtung (Y1) in Bezug auf einen der Kanäle (5a, 5b, 5c), der an einer weitesten Position zur ersten Richtung (Y1) angeordnet ist, oder andererseits an einer Seite der zweiten Richtung (Y2) in Bezug auf einen der Kanäle (5a, 5b, 5c) angeordnet ist, der an einer weitesten Position zur zweiten Richtung (Y2) angeordnet ist.

4. Kartenleser nach Anspruch 2;
bei welchem der Magnetkopf (5) mit einem ersten Kanal (5a), einem zweiten Kanal (5b) und einem dritten Kanal (5c) als die Kanäle versehen ist; der erste Kanal (5a), der zweite Kanal (5b) und der dritte Kanal so angeordnet sind, dass sie in dieser Reihenfolge von der Seite der ersten Richtung (Y1) zur Seite der zweiten Richtung (Y2) nebeneinanderliegen; aus Sicht der Bewegungsrichtung (X) der Karte (2) die Kippachse (C) des Magnetkopfes (5) nahezu an derselben Position wie der zweite Kanal (5b) in horizontaler Richtung angeordnet ist; und
das eine Ende der zugewandten Rolle (7) in der Richtung (Y) der Breite der Karte (2) an einer Seite der ersten Richtung (Y1) in der Richtung (Y) der Breite der Karte (2) in Bezug auf den ersten Kanal (5a) angeordnet ist.

5. Kartenleser nach einem der Ansprüche 1 bis 4;
wobei der Kartenleser eine Transportrolle (8) zum Transport der Karte (2) im Kartentransportpfad (3) und eine Kissenrolle (9), die so angeordnet ist, dass sie der Transportrolle (8) in einer solchen Weise gegenüberliegt, dass die sich durch den Kartentransportpfad (3) bewegende Karte (2) zwischen der Transportrolle (8) und der Kissenrolle (9) gehalten wird, enthält; und
eine Richtung in der Richtung (Y) der Breite der Karte (2) eine erste Richtung (Y1) und die andere Richtung in der Richtung (Y) der Breite der Karte (2) eine zweite Richtung (Y2) ist,
der Magnetkopf (5) und die zugewandte Rolle (7) an einer Seite der ersten Richtung (Y1) in der Richtung (Y) der Breite der Karte (2) in Bezug auf die Transportrolle (8) und die Kissenrolle (9) angeordnet sind, und
aus Sicht der Transportrichtung (X) der Karte (2) das eine Ende der zugewandten Rolle (7) in der Richtung (Y) der Breite der Karte (2) an einer Seite der ersten Richtung (Y1) in der Richtung (Y) der Breite der Karte (2) in Bezug auf die Kippachse (C) des Magnetkopfes (5) angeordnet ist.

## Revendications

1. Lecteur de carte (1) comprenant :
un chemin de transfert de carte (3) à travers lequel passe une carte (2) ;
une tête magnétique (5) pour au moins l'un parmi la lecture de données magnétiques enregistrées sur la carte (2) et l'enregistrement de données magnétiques sur la carte (2) ; et
un rouleau en regard (7) placé de manière à faire face à la tête magnétique (5), de manière à maintenir la carte (2), passant à travers le chemin de transfert de carte (3), entre la tête magnétique (5) et le rouleau en regard (7) lui-même ;
dans lequel des données magnétiques d'une pluralité de pistes peuvent être enregistrées sur la carte (2) ;
dans lequel la tête magnétique (5) est pourvue d'une pluralité de canaux (5a, 5b, 5c) pour au moins l'un parmi la lecture et l'enregistrement de données magnétiques de la pluralité de pistes individuellement ;
dans lequel la pluralité de canaux (5a, 5b, 5c) sont placés de manière à être alignés dans la direction de la largeur (Y) de la carte (2), la direction de la largeur (Y) étant perpendiculaire à une direction de passage (X) de la carte (2) qui traverse le chemin de transfert de carte (3), ainsi qu'à une direction (Z) d'une épaisseur de la carte (2) ; et
dans lequel le rouleau en regard (7) est un rouleau conique dans lequel un diamètre extérieur à une extrémité du rouleau en regard (7) dans la direction de la largeur (Y) de la carte (2) est supérieur à un diamètre extérieur à l'autre extrémité du rouleau en regard (7) dans la direction de la largeur (Y) de la carte (2) ;
**caractérisé en ce que**
la tête magnétique (5) est orientée vers le rouleau en regard (7) et, en outre, la tête magnétique (5) peut basculer par rapport à un axe d'inclinaison (C) disposé parallèlement à la direction de passage (X) de la carte (2) ; et
vu depuis la direction de passage (X) de la carte (2), l'une première extrémité du rouleau en regard (7) dans la direction de la largeur (Y) de la carte (2) et l'axe d'inclinaison (C) de la tête magnétique (5) sont déplacés l'un par rapport à l'autre dans la direction de la largeur (Y) de la carte (2) dans lequel, vu depuis la direction de passage (X) de la carte (2), la forme du rouleau en regard (7) est un trapèze isocèle.

2. Lecteur de carte selon la revendication 1 ;
dans lequel une largeur du rouleau en regard (7) dans la direction de la largeur (Y) de la carte (2) est plus étroite qu'une largeur de la tête magnétique (5) dans la direction de la largeur (Y) de la carte (2).

3. Lecteur de carte selon la revendication 1 ou la revendication 2 ;
dans lequel, une direction dans la direction de la largeur (Y) de la carte (2) est une première direction (Y1) et l'autre direction dans la direction de la largeur (Y) de la carte (2) est une seconde direction (Y2) ;
dans la direction de la largeur (Y) de la carte (2), l'une des extrémités du rouleau en regard (7) dans la direction de la largeur (Y) de la carte (2) est placée d'un côté de la première direction (Y1), par rapport à l'un des canaux (5a, 5b, 5c) placé à une position la plus éloignée de la première direction (Y1), ou autrement, est placée d'un côté de la seconde direction (Y2), par rapport à l'un des canaux (5a, 5b, 5c) placé à une position la plus éloignée dans la seconde direction (Y2).

4. Lecteur de carte selon la revendication 3 ;
dans lequel la tête magnétique (5) est pourvue, à titre de canaux, d'un premier canal (5a), d'un deuxième canal (5b) et d'un troisième canal (5c) ;
le premier canal (5a), le deuxième canal (5b) et le troisième canal sont placés de manière à être alignés dans cet ordre depuis le côté de la première direction (Y1) vers le côté de la seconde direction (Y2) :
vu depuis la direction de passage (X) de la carte (2), l'axe d'inclinaison (C) de la tête magnétique (5) est placé presque à la même position que le deuxième canal (5b), dans une direction horizontale ; et
l'une des extrémités du rouleau en regard (7) dans la direction de la largeur (Y) de la carte (2) est placée d'un côté de la première direction (Y1) dans la direction de la largeur (Y) de la carte (2) par rapport au premier canal (5a).

5. Lecteur de carte selon l'une quelconque de la revendication 1 à la revendication 4,
dans lequel le lecteur de carte comprend un rouleau de transfert (8) pour transférer la carte (2) dans le chemin de transfert de carte (3), et un rouleau coussiné (9) placé de manière à faire face au rouleau de transfert (8) de manière à maintenir la carte (2), passant à travers le chemin de transfert de carte (3), entre le rouleau de transfert (8) et le rouleau coussiné (9) lui-même ; et
une direction dans la direction de la largeur (Y) de la carte (2) est une première direction (Y1) et l'autre direction dans la direction de la largeur (Y) de la carte (2) est une seconde direction (Y2),
la tête magnétique (5) et le rouleau en regard (7) sont placés d'un côté de la première direction (Y1) dans la direction de la largeur (Y) de la carte (2), par rapport au rouleau de transfert (8) et au rouleau coussiné (9), et
vu depuis la direction de passage (X) de la carte (2), l'une des extrémités du rouleau en regard (7) dans la direction de la largeur (Y) de la carte (2) est placée d'un côté de la première direction (Y1) dans la direction de la largeur (Y) de la carte (2) par rapport à l'axe d'inclinaison (C) de la tête magnétique (5).
